# EUROPÄISCHE PATENTSCHRIFT

(11) **EP 2 690 728 B1**
(45) Veröffentlichungstag und Bekanntmachung des Hinweises auf die Patenterteilung: **04.11.2015**
(21) Anmeldenummer: 12178085.2
(22) Anmeldetag: 26.07.2012
(51) Int. Cl.: H02G 3/12, H02G 3/14

(54) **Hohlwanddose zur Elektro-Installation**
Thin wall box for electric installation
Boîte d'encastrement pour cloison sèche pour appareillage électrique

(43) Veröffentlichungstag der Anmeldung: 29.01.2014
(73) Patentinhaber: GIRA GIERSIEPEN GmbH & Co. KG, 42477 Radevormwald (DE)
(72) Erfinder: Weingärtner, Ilka, 51688 Wipperfürth (DE); Hoster, Bernhard, 58339 Breckerfeld (DE); Vole, Andreas, 51688 Wipperfürth (DE); Kalinke, Jens, 42499 Hückeswagen (DE); Geese, Carsten, 42499 Hückeswagen (DE); Lankuttis, Klaus, 51465 Bergisch-Gladbach (DE); Wied, Michael, 42929 Wermelskirchen (DE)
(74) Vertreter: Patentanwälte Dr. Solf & Zapf

(56) Entgegenhaltungen:
- EP-A1- 1 511 144
- DE-A1- 2 355 826
- DE-A1- 3 001 574
- FR-A1- 2 839 818

## Beschreibung

Die vorliegende Erfindung betrifft gemäß dem Oberbegriff des Anspruchs 1 eine Hohlwanddose für die Elektro-Installation, mit einem topfartigen, eine einseitige Öffnung aufweisenden Dosenkörper zum Einsetzen in einen Lochausschnitt einer Montagewand und zur Aufnahme eines Geräteeinsatzes eines Elektro-Installationsgerätes, wie Schalter, Steckdose oder dergleichen, sowie mit einem die Öffnung des Dosenkörpers flanschartig umschließenden Auflagerand zur Anlage an der Montagewand, und mit einer Krallenbefestigung mit krallenartigen, auf der Außenseite des Dosenkörpers geführten und mittels je einer seitlichen Montageschraube zum Hintergreifen der Montagewand betätigbaren Haltelementen, wobei der Dosenkörper und der Auflagerand als separate Einzelteile ausgebildet sind, wobei der Auflagerand von einem rahmenförmigen, flachen Tragelement nach Art eines bei Elektro-Installationsgeräten üblichen Tragrings gebildet ist, und wobei das Tragelement und der Dosenkörper gemeinsam mit den Montageschrauben der Krallenbefestigung montierbar sind, wobei das Tragelement relativ zu dem Dosenkörper in einer Montageebene zur Ausrichtung verstellbar ist.

Hohlwanddosen, häufig auch als ISO-Hohlwanddosen bezeichnet, sind hinlänglich und auch in teilweise unterschiedlichen Ausführungsvarianten bekannt. Lediglich beispielhaft seien hier die Veröffentlichungen DE 25 26 890 C2, DE 41 28 042 A1, DE 42 41 390 A1 und DE 202 17 322 U1 genannt.

Zur Geräte-Installation mit solchen bekannten Hohlwanddosen werden zunächst in Hohlwänden passende kreisförmige Lochausschnitte hergestellt. In jeden Lochausschnitt wird dann eine Hohlwanddose eingesetzt und über die Krallenbefestigungen befestigt, wozu die üblicherweise zwei diametral gegenüberliegenden krallenartigen Halteelemente mittels der zugehörigen zwei Montageschrauben von hinten gegen die Montagewand gezogen werden. Dabei stützt sich die Dose über ihren flanschartigen Auflagerand zur Einsetzbegrenzung an der Montagewand ab. Die eigentliche Gerätemontage erfolgt dann in aller Regel über zwei weitere Montageschrauben, die durch Löcher eines geräteseitigen Tragrings in Schraubenlöcher im Randbereich der Dose eingeschraubt werden. Alternativ kann auch eine Gerätemontage über so genannte Spreizkrallen des jeweiligen Geräteeinsatzes erfolgen. In jedem Fall sind aber für die Montage eines Gerätes insgesamt vier Verschraubungen erforderlich. Außerdem kann der Nachteil auftreten, dass der flanschartige Auflagerand der Dose im an den jeweiligen Wand-Lochausschnitt angrenzenden Bereich auf der Oberfläche der Wand zur Auflage kommt. Dies führt dann dazu, dass der Geräte-Tragring nicht flächenbündig auf der Wand montiert werden kann, sondern über einen von der Dicke des Dosen-Auflagerandes bestimmten Abstand von der Wand entfernt ist, was aber eine korrekte Montage von Rahmenteilen des Installationsgerätes beeinträchtigt. Dieser Nachteil kann nur vermieden werden, wenn der Dosen-Auflagerand über eine Loch-Anfasung versenkt wird. Allerdings ist dies nicht in allen Fällen möglich, beispielsweise nicht oder nur sehr eingeschränkt bei metallischen Wandungen.

In der DE 23 55 826 A1 ist ebenfalls eine Hohlwanddose beschrieben, wobei jedoch in einer Ausführungsform der Dosenkörper ohne einen Auflagerand ausgebildet ist, wobei dann der Tragring zur Abstützung gegen die Montagewand dient. Hierbei ist vorgesehen, dass die Montageschrauben der Krallenbefestigungen auch den Tragring befestigen.

In der FR 2 839 818 A1 ist eine Hohlwanddose beschrieben, bei der die Abdeckung des Geräteeinsatzes mittels zwei Montageschrauben an der Hohlwanddose befestigt wird, wobei die Montageschrauben krallenartige Haltelemente, die am Außenumfang der Hohlwanddose geführt sind, gegen die Montagewand anziehen und somit die Hohlwanddose in der Montageöffnung fixieren.

Die EP 1 511 144 A1 beschreibt eine Hohlwanddose, die am Außenumfang mehrere Klemmzungen aufweist. Die Klemmzungen werden im eingesetzten Zustand der Hohlwanddose über einen Doseneinsatz nach außen gedrückt, so dass sie die Montageöffnung hintergreifen. Dazu wird die Außenkante des Doseneinsatzes mittels in einem Tragring eingesteckten Montageschrauben gegen eine schräge Flanke an der Innenseite der Klemmzungen gezogen, so dass die Klemmzungen nach außen gedrückt werden.

In der DE 30 01 574 A1 ist eine Hohlwanddose beschrieben, die am Außenumfang starre Anlagenocken zur Anlange an der Innenseite der Montagewand aufweist. Zur Befestigung der Hohlwanddose wird ein Doseneinsatz mit einem Anlagerand mittels Montageschrauben mit der Hohlwanddose verschraubt, wobei Toleranzen in der Dicke der Montagewand durch ein variables Einschieben des Doseneinsatzes ausgeglichen werden können.

Der vorliegenden Erfindung liegt die Aufgabe zu Grunde, eine Hohlwanddose der eingangs beschriebenen, gattungsgemäßen Art zu schaffen, mit der der Montageaufwand zur Installation von Elektro-Installationsgeräten reduziert und die Montagequalität verbessert wird.

Erfindungsgemäß wird diese Aufgabe durch eine Hohlwanddose mit den Merkmalen des unabhängigen Anspruchs 1 gelöst. Vorteilhafte Ausgestaltungsmerkmale der Erfindung sind in den abhängigen Ansprüchen sowie in der anschließenden Beschreibung enthalten.

Erfindungsgemäß ist demnach vorgesehen, dass das Tragelement im Bereich jeder Montageschraube einen in den Dosenkörper eingreifenden, parallel beabstandeten Haltesteg aufweist, wobei das Tragelement und jeder Haltesteg fluchtende Durchführöffnungen für die jeweilige Montageschraube derart aufweisen, dass ein Schraubenkopf der Montageschraube versenkt im Bereich zwischen dem Tragelement und dem Haltesteg angeordnet ist. Dies erlaubt eine besonders platzsparende und ebene Montage.
Der Dosenkörper hat selbst keinen einstückigen flanschartigen Auflagerand mehr, so dass er mit seiner im Wesentlichen zylindrischen Außenumfangsfläche beliebig weit in den Wand-Lochausschnitt eingesetzt werden kann. Daher kann das gesonderte Tragelement jedenfalls optimal flächenbündig auf der Montagewand befestigt werden. Durch ein erfindungsgemäß vorgegebenes relatives Bewegungsspiel zwischen dem Dosenkörper und dem Tragelement kann vorteilhafterweise das Tragelement in einem noch nicht vollständig fest angezogenen Zustand der Montageschrauben relativ zu dem in dem Wand-Lochausschnitt sitzenden und daher in seiner Position festgelegten Dosenkörper in einer von der Fläche des Tragelementes bzw. von der Wandfläche definierten Montageebene ausgerichtet und anschließend über die Montageschrauben durch festes Anziehen befestigt werden. Dies ist vor allem wichtig, um eine genaue waagerechte oder senkrechte Ausrichtung des Tragelementes vornehmen zu können. Ferner spielt die Ausrichtbarkeit eine wichtige Rolle, wenn mindestens zwei Dosen neben- oder übereinander für eine Mehrfachgeräte-Kombination montiert sind, und wenn es dabei, d. h. bei der vorhergehenden Herstellung der Wand-Lochausschnitte, zu Abweichungen von der optimalen Soll-Position, z. B. von dem erforderlichen Stichmaß-Mittenabstand, in Deutschland üblicherweise 71 mm, kommen sollte. In solchen Fällen können dann die zwei Tragelemente relativ zu den Dosenkörpern und damit auch relativ zueinander so ausgerichtet werden, dass sie optimal aneinander angrenzen.

In einer vorteilhaften Ausgestaltung der Erfindung bildet das Tragelement eine Schnittstelle für eine Rastverbindung mit dem sockelartigen Geräteeinsatz, wobei der jeweilige, ohne einen Tragring ausgebildete Geräteeinsatz lediglich in eine angepasste Schnittstellen-Öffnung des dosenseitig vormontierten Tragelementes einzusetzen ist, bis er über die Rastverbindung selbsttätig fixiert ist. Erfindungsgemäß ist somit der Geräte-Tragring von dem jeweiligen Geräteeinsatz zu der erfindungsgemäßen Hohlwanddose verlagert. Dadurch wird eine wesentliche Reduzierung des Montageaufwandes erreicht, weil zur Installation eines Gerätes nur noch insgesamt zwei Montageschrauben erforderlich sind, mit denen erfindungsgemäß der Dosenkörper und auch das Tragelement wandseitig vormontiert werden. Die eigentliche Geräte-Installation erfolgt dann "schraubenlos", weil nur noch der ohne Tragring ausgebildete Geräteeinsatz - nach Anschluss von elektrischen Leitungen - in die erfindungsgemäße Hohlwanddose, d. h. in deren dem Dosenkörper zugeordnetes Tragelement, eingesetzt bzw. eingesteckt zu werden braucht, wobei über die Rastverbindung eine schnelle und praktisch automatische Befestigung erfolgt. Durch die zuvor erreichte optimal ausgerichtete bzw. ausrichtbare Montageposition des Tragelementes wird auch automatisch, ohne zusätzliches Ausrichten, eine optimale Position des Gerätes gewährleistet.

Im Folgenden soll die Erfindung anhand der Zeichnungen und darin dargestellter, bevorzugter Ausführungsbeispiele weitergehend erläutert werden. Es zeigen:
- Fig. 1: eine perspektivische Explosionsdarstellung einer erfindungsgemäßen Hohlwanddose zusammen mit einem vereinfachten Teil eines Geräteeinsatzes,
- Fig. 2: eine gegenüber Fig. 1 etwas vergrößerte Perspektivansicht auf die Rückseite eines erfindungsgemäßen Tragelementes der Hohlwanddose zusammen mit dem Geräteeinsatz-Teil gemäß Fig. 1,
- Fig. 3: eine perspektivische Explosionsdarstellung einer Mehrfach-Anordnung mehrerer, und zwar beispielhaft drei Hohlwanddosen mit einem gemeinsamen, einteiligen Mehrfach-Tragelement,
- Fig. 4: eine Vorderansicht in Pfeilrichtung IV gemäß Fig. 1 auf eine erfindungsgemäße Hohlwanddose im montierten Zustand,
- Fig. 5: eine Schnittansicht in der Ebene V-V gemäß Fig. 4,
- Fig. 6: eine weitere Schnittansicht, jedoch in der Ebene VI-VI gemäß Fig. 4.
- Fig. 7: eine Ausführungsvariante eines Einfach-Tragelementes in einer Perspektivdarstellung analog zu Fig. 1,
- Fig. 8: das Tragelement gemäß Fig. 7 in einer rückseitigen Perspektivansicht analog zu Fig. 2 und
- Fig. 9: eine entsprechende Ausführungsvariante des Mehrfach-Tragelementes analog zu Fig. 3.

In den verschiedenen Figuren der Zeichnung sind gleiche Teile stets mit den gleichen Bezugszeichen versehen.

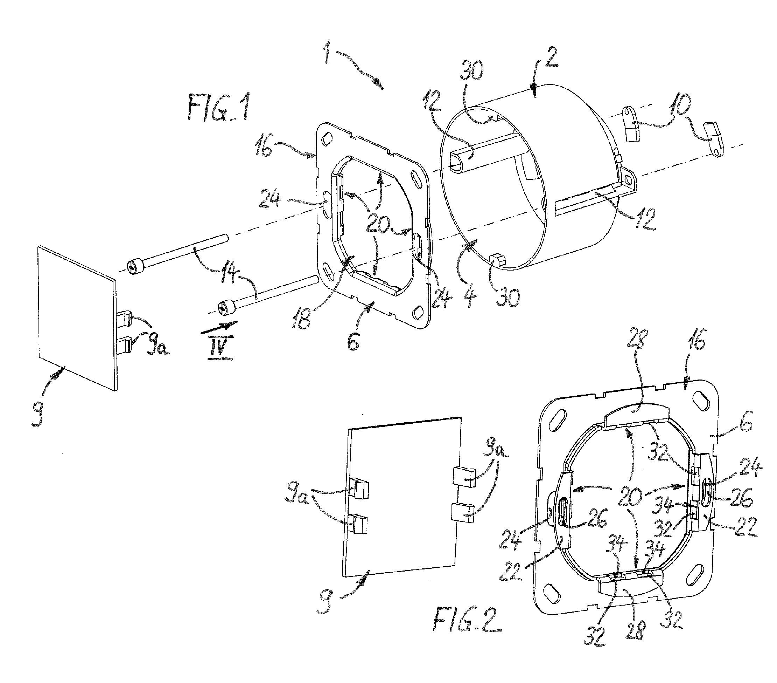

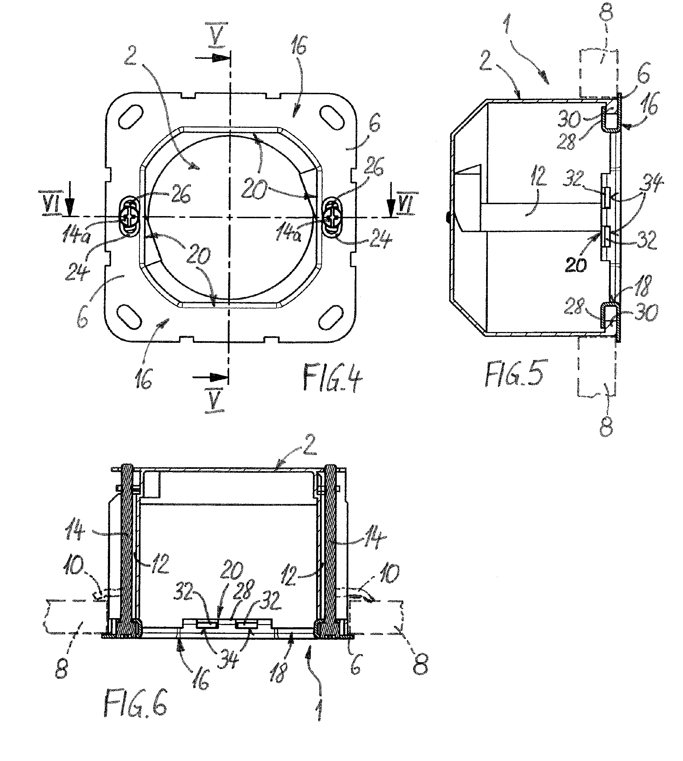

Wie sich zunächst aus Fig. 1 ergibt, besteht eine erfindungsgemäße Hohlwanddose 1 aus einem topfartigen Dosenkörper 2 mit einer einseitigen Öffnung 4 sowie aus einem die Öffnung 4 des Dosenkörpers 2 flanschartig umschließenden Auflagerand 6. Gemäß Fig. 5 und 6 wird der Dosenkörper 2 in einen Lochausschnitt einer nur gestrichelt angedeuteten Montagewand 8 eingesetzt, wobei der Auflagerand 6 zur einsetzbegrenzenden Anlage an einem an den Lochausschnitt umfangsgemäß angrenzenden Bereich der Montagewand 8 gelangt. Der Dosenkörper 2 dient zur Aufnahme eines nur teilweise vereinfacht und schematisch angedeuteten Geräteeinsatzes 9 eines Elektro-Installationsgerätes, wobei der Geräteeinsatz 9 trotz der vereinfachten, nur wandungsartigen Darstellung auch beispielsweise als Schalter, Steckdose oder dergleichen ausgebildet sein kann. Der Geräteeinsatz 9 weist somit auch einen nicht dargestellten, in den Dosenkörper 2 einzusetzenden Gerätekörper auf.

Zur Befestigung in dem Lochausschnitt der Montagewand 8 weist die Hohlwanddose 1 weiterhin eine Krallenbefestigung mit zwei diametral gegenüberliegenden, krallenartigen Halteelementen 10 auf, die auf der Außenseite des Dosenkörpers 2 in schachtartigen Führungen 12 verschiebbar geführt und mittels jeweils einer seitlichen Montageschraube 14 zum Hintergreifen der Montagewand 8 betätigbar sind. Hierzu wird insbesondere auf Fig. 6 verwiesen.

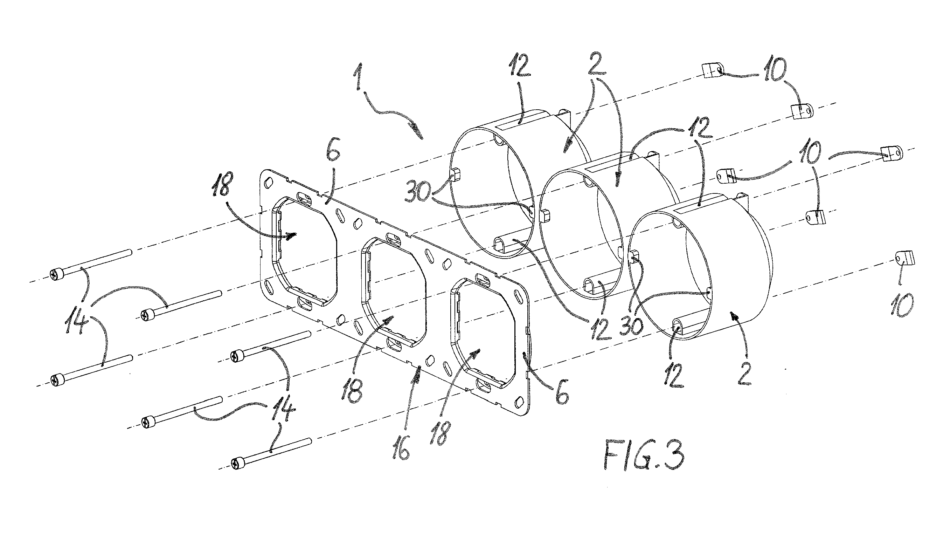

Erfindungsgemäß ist nun vorgesehen, dass der Dosenkörper 2 und der Auflagerand 6 als separate Einzelteile ausgebildet sind. Gemäß Fig. 1 und 3 weist somit der Dosenkörper 2 selbst keinen einstückigen Auflagerand 6 auf. Der Auflagerand 6 ist von einem rahmenförmigen, flachen Tragelement 16 gebildet, wobei dieses Tragelement 16 nach Art eines bei Elektro-Installationsgeräten üblichen so genannten Tragrings ausgebildet ist. Weiterhin sind hierbei das Tragelement 16 und der Dosenkörper 2 gemeinsam mit den nur zwei Montageschrauben 14 der Krallenbefestigung montierbar. Die Verbindung zwischen dem Dosenkörper 2 und dem Tragelement 16 ist derart ausgebildet, dass das Tragelement 16 relativ zu dem Dosenkörper 2 in einer von der vorderen Fläche der Montagewand 8 definierten Montageebene zur Ausrichtung innerhalb eines bestimmten Relativbewegungsbereiches verstellbar ist.

Das Tragelement 16 bildet vorteilhafterweise eine Schnittstelle für eine Rastverbindung mit dem jeweiligen Geräteeinsatz 9. Somit braucht der- ohne einen Tragring bereitgestellte - Geräteeinsatz 9 lediglich in eine innere Aufnahmeöffnung 18 des Tragelementes 16 eingesteckt zu werden, wobei die innere Aufnahmeöffnung 18 randliche Haltekonturen 20 aufweist, die von federelastischen Rastelementen 9a des Geräteeinsatzes 9 insbesondere formschlüssig hintergreifbar sind. Diese Rastverbindung ist bevorzugt aber auch lösbar, indem die Rastelemente 9a mit einem Werkzeug zur Freigabe elastisch verformt werden können.

Hierbei ist es weiterhin vorteilhaft, wenn die Aufnahmeöffnung 18 des Tragelementes 16 bezüglich der Haltekonturen 20 derart ausgebildet ist, dass der Geräteeinsatz 9 in mindestens zwei verschiedenen, um insbesondere 90° in der Montageebene gedrehten Ausrichtungen rastend einsetzbar ist. Bevorzugt ist die Aufnahmeöffnung 18 bezüglich der Haltekonturen 20 quadratisch mit je zwei paarweise parallel gegenüberliegenden Seiten und bevorzugt mit abgerundeten Übergängen zwischen den jeweils benachbarten, zueinander rechtwinkligen Seiten ausgebildet. Über Anlage an den Haltekonturen 20 wird der Geräteeinsatz 9 vorteilhafterweise auch gegen Verdrehung in der Aufnahmeöffnung 18 geführt.

Erfindungsgemäß weist das Tragelement 16 im Bereich jeder Montageschraube 14 einen in den Dosenkörper 2 eingreifenden, parallel beabstandeten Haltesteg 22 auf (siehe insbesondere Fig. 2), wobei das Tragelement 16 und jeder Haltesteg 22 fluchtende Durchführöffnungen 24, 26 für die jeweilige Montageschraube 14 derart aufweisen, dass ein Schraubenkopf 14a der jeweiligen Montageschraube 14 versenkt im Bereich zwischen dem Tragelement 16 und dem Haltesteg 22 angeordnet ist. Die Durchführöffnungen 24, 26 sind bevorzugt als Langlöcher ausgebildet, wobei die jeweilige Durchführöffnung 24 des Tragelementes 16 derart größer als die Durchführöffnung 26 des Haltestegs 22 ausgebildet ist, dass der Schraubenkopf 14a durch die Durchführöffnung 24 des Tragelementes 16 hindurch geführt werden kann, bis er auf dem Haltesteg 22 aufliegt. Wie sich insbesondere aus Fig. 6 ergibt, liegen im montierten Zustand die Haltestege 22 auf Stirnflächen der schachtartigen Führungen auf, so dass sie beim Anziehen der Montageschrauben 14 abgestützt werden. Die als Langlöcher ausgebildeten Durchführöffnungen 24, 26 gestatten ein relatives Ausrichten des Tragelementes 16 relativ zum Dosenkörper 2.

Wie sich weiterhin am besten aus Fig. 2 und 5 ergibt, ist das Tragelement 16 bevorzugt mit dem Dosenkörper 2 zusätzlich nach Art einer Bajonettverbindung verbunden. Dazu weist das Tragelement 16 gemäß Fig. 2 in zwei diametral gegenüberliegenden Bereichen jeweils einen in den Dosenkörper 2 eingreifenden, parallel beabstandeten Haltesteg 28 auf, wobei das Tragelement 16 mit diesen Haltestegen 28 in einer relativen Drehstellung des Dosenkörpers 2 in diesen einsetzbar ist und nach einem relativen Verdrehen in eine Montageposition die Haltestege 28 jeweils einen Halteansatz 30 innerhalb des Dosenkörpers 2 hintergreifen. Zu den Halteansätzen 30 wird besonders auch auf Fig. 1 und 3 verwiesen.

Jeder Haltesteg 22 und 28 ist über einen Übergangsabschnitt am Rand der inneren Aufnahmeöffnung 18 mit dem Tragelement 16 einstückig verbunden und erstreckt sich von dem Übergangsabschnitt und der Aufnahmeöffnung 18 weg nach außen. Auch hierzu wird insbesondere auf die rückseitige Ansicht in Fig. 2 verwiesen. Zur Bildung der Haltekonturen 20 für die Rastelemente 9a des Geräteeinsatzes 9 weist jeder Übergangsabschnitt mindestens eine durch eine Ausnehmung 32 gebildete Haltekante 34 auf. In der dargestellten, bevorzugten Ausführung sind im Bereich jedes Haltestegs 22, 28 zwei Ausnehmungen 32 mit Haltekanten 34 benachbart nebeneinander angeordnet. Gemäß Fig. 1 und 2 weist deshalb der Geräteeinsatz 9 auf jeder von zwei diametral gegenüberliegenden Seiten ebenfalls zwei Rastelemente 9a auf, die mit den jeweils zwei Haltekanten 34 rastend zusammenwirken.

Was noch das Ausführungsbeispiel gemäß Fig. 3 betrifft, so ist hierbei das Tragelement 16 als Mehrfachrahmen für eine Verbindung mit mehreren, wie dargestellt beispielsweise drei Dosenkörpern 2 ausgebildet. Es ist aber auch eine Ausbildung als Zweifach- bis zu Fünffach-Rahmen möglich. Der Mehrfachrahmen hat für jeden Dosenkörper 2 eine gleichartige innere Aufnahmeöffnung 18. Im Übrigen entspricht die Ausgestaltung des Mehrfachrahmens in seinem jedem Dosenkörper 2 zugeordneten Bereich dem Einfach-Tragelement 16 gemäß Fig. 1 und 2. Dies bedeutet, dass im Grunde nur mehrere Tragelemente 16 nebeneinander einstückig verbunden sind.

Das Tragelement 16 und gegebenenfalls das Mehrfach-Tragelement 16 gemäß Fig. 3 besteht als einstückiges Formteil aus Kunststoff oder Metall. So kann es sich mit Vorteil um ein Kunststoff-Spritzgussteil oder alternativ um ein Metallblech-Formteil handeln.

Es sei noch bemerkt, dass das Einfach- oder Mehrfach-Tragelement 16 beliebige Außenrand-Konturen und auch beliebige Innenrand-Konturen der Aufnahmeöffnung 18 aufweisen kann.

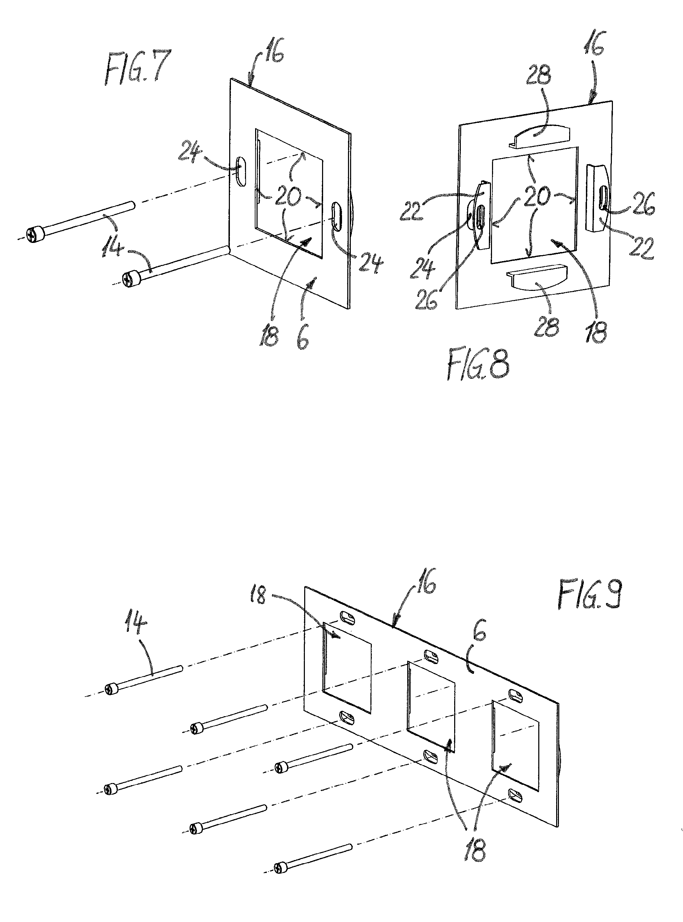

So sind in den Figuren 7 bis 9 beispielhaft Ausführungsvarianten veranschaulicht, wobei das Tragelement 16 eine quadratische oder rechteckige Außenkontur mit rechtwinkligen Außenecken aufweist, und die/jede Aufnahmeöffnung 18 ist bevorzugt quadratisch mit rechtwinkligen Innenecken ausgebildet. Die Haltekonturen 20 sind dabei von geraden Öffnungsrändern gebildet.

## Patentansprüche

1. Hohlwanddose (1) für die Elektro-Installation, mit einem topfartigen, eine einseitige Öffnung (4) aufweisenden Dosenkörper (2) zum Einsetzen in einen Lochausschnitt einer Montagewand (8) und zur Aufnahme eines Geräteeinsatzes (9) sowie mit einem die Öffnung (4) des Dosenkörpers (2) flanschartig umschließenden Auflagerand (6) zur Anlage an der Montagewand (8), und mit einer Krallenbefestigung mit krallenartigen, auf der Außenseite des Dosenkörpers (2) geführten und mittels je einer Montageschraube (14) betätigbaren Haltelementen (10), wobei der Dosenkörper (2) und der Auflagerand (6) als separate Einzelteile ausgebildet sind, wobei der Auflagerand (6) von einem rahmenförmigen, flachen Tragelement (16) nach Art eines bei Elektro-Installationsgeräten üblichen Tragrings gebildet ist, und wobei das Tragelement (16) und der Dosenkörper (2) gemeinsam mit den Montageschrauben (14) der Krallenbefestigung montierbar sind, wobei das Tragelement (16) relativ zu dem Dosenkörper (2) in einer Montageebene zur Ausrichtung verstellbar ist, **dadurch gekennzeichnet, dass** das Tragelement (16) im Bereich jeder Montageschraube (14) einen in den Dosenkörper (2) eingreifenden, parallel beabstandeten Haltesteg (22) aufweist, wobei das Tragelement (16) und jeder Haltesteg (22) fluchtende Durchführöffnungen (24, 26) für die jeweilige Montageschraube (14) derart aufweisen, dass ein Schraubenkopf (14a) der Montageschraube (14) versenkt im Bereich zwischen dem Tragelement (16) und dem Haltesteg (22) angeordnet ist.

2. Hohlwanddose nach Anspruch 1,
**dadurch gekennzeichnet, dass** das Tragelement (16) eine Schnittstelle für eine Rastverbindung mit dem Geräteeinsatz (9) bildet.

3. Hohlwanddose nach Anspruch 1 oder 2,
**dadurch gekennzeichnet, dass** das Tragelement (16) eine innere Aufnahmeöffnung (18) mit randlichen Haltekonturen (20) aufweist, die von federelastischen Rastelementen (9a) des Geräteeinsatzes (9) hintergreifbar sind.

4. Hohlwanddose nach Anspruch 3,
**dadurch gekennzeichnet, dass** die Aufnahmeöffnung (18) des Tragelementes (16) bezüglich der Haltekonturen (20) derart ausgebildet ist, dass der Geräteeinsatz (9) in mindestens zwei verschiedenen, um insbesondere 90° in der Montageebene gedrehten Ausrichtungen rastend einsetzbar, im eingesetzten Zustand aber jeweils gegen Verdrehen in der Aufnahmeöffnung (18) gesichert ist.

5. Hohlwanddose nach einem der Ansprüche 1 bis 4,
**dadurch gekennzeichnet, dass** das Tragelement (16) mit dem Dosenkörper (2) zusätzlich nach Art einer Bajonettverbindung verbunden ist.

6. Hohlwanddose nach Anspruch 5,
**dadurch gekennzeichnet, dass** das Tragelement (16) in zwei diametral gegenüberliegenden Bereichen jeweils einen in den Dosenkörper (2) eingreifenden, parallel beabstandeten Haltesteg (28) aufweist, wobei die Haltestege (28) in einer relativen Drehstellung des Dosenkörpers (2) in diesen einsetzbar sind und nach einem relativen Verdrehen in eine Montageposition jeweils einen Halteansatz (30) innerhalb des Dosenkörpers (2) hintergreifen.

7. Hohlwanddose nach einem der Ansprüche 5 bis 6,
**dadurch gekennzeichnet, dass** jeder Haltesteg (22 und 28) über einen Übergangsabschnitt am Rand der inneren Aufnahmeöffnung (18) mit dem Tragelement (16) verbunden ist und sich von dem Übergangsabschnitt und von der Aufnahmeöffnung (18) weg nach außen erstreckt.

8. Hohlwanddose nach Anspruch 7,
**dadurch gekennzeichnet, dass** jeder Übergangsabschnitt zur Bildung der Haltekonturen (20) für die Rastelemente (9a) des Geräteeinsatzes (9) mindestens eine durch eine Ausnehmung (32) gebildete Haltekante (34) aufweist.

9. Hohlwanddose nach einem der Ansprüche 1 bis 8,
**dadurch gekennzeichnet, dass** das Tragelement (16) als Mehrfachrahmen für eine Verbindung mit mindestens zwei Dosenkörpern (2) ausgebildet ist.

10. Hohlwanddose nach einem der Ansprüche 1 bis 9,
**dadurch gekennzeichnet, dass** das Tragelement (16) als einstückiges Formteil aus Kunststoff oder Metall besteht.

## Claims

1. Hollow-wall box (1) for electrical-installation purposes, having a cup-like box body (2) which has an opening (4) on one side and is intended for inserting into a hole cutout in an installation wall (8) and for accommodating an appliance insert (9), and having a bearing periphery (6) which encloses the opening (4) of the box body (2) in a flange-like manner and is intended for butting against the installation wall (8), and having a claw-fastening means with claw-like retaining elements (10) which are guided on the outside of the box body (2) and can be actuated by means of a respective installation screw (14), wherein the box body (2) and the bearing periphery (6) are designed in the form of separate, individual parts, wherein the bearing periphery (6) is formed by a frame-like, flat carrying element (16) in the manner of a carrying ring which is customary for electrical-installation appliances, and wherein the carrying element (16) and the box body (2) can be installed together by way of the installation screws (14) of the claw-fastening means, it being possible for the carrying element (16) to be adjusted relative to the box body (2) in an installation plane for alignment purposes,
**characterized in that** the carrying element (16), in the region of each installation screw (14), has a retaining crosspiece (22), which engages in the box body (2) and is spaced apart from the carrying element, parallel thereto, wherein the carrying element (16) and each retaining crosspiece (22) has aligned through-openings (24, 26) for the respective installation screw (14) such that a head (14a) of the installation screw (14) is arranged in a recessed manner in the region between the carrying element (16) and the retaining crosspiece (22).

2. Hollow-wall box according to Claim 1,
**characterized in that** the carrying element (16) forms an interface for a latching connection to the appliance insert (9).

3. Hollow-wall box according to Claim 1 or 2,
**characterized in that** the carrying element (16) has an inner accommodating opening (18) with peripheral retaining contours (20), behind which resilient latching elements (9a) of the appliance insert (9) can engage.

4. Hollow-wall box according to Claim 3,
**characterized in that** the accommodating opening (18) of the carrying element (16) is designed, in respect of the retaining contours (20), such that the appliance insert (9) can be inserted with latching action in at least two different orientations rotated through in particular 90° in the installation plane, but, in the inserted state, is secured in each case against rotation in the accommodating opening (18).

5. Hollow-wall box according to one of Claims 1 to 4, **characterized in that** the carrying element (16) is connected to the box body (2), in addition, in the manner of a bayonet connection.

6. Hollow-wall box according to Claim 5,
**characterized in that** the carrying element (16), in two diametrically opposite regions, has a respective retaining crosspiece (28), which engages in the box body (2) and is spaced apart from the carrying element, parallel thereto, wherein the retaining crosspieces (28) can be inserted into the box body (2) in a relative rotary position of the latter and, following relative rotation into an installation position, engage behind a respective retaining extension (30) within the box body (2).

7. Hollow-wall box according to either of Claims 5 and 6,
**characterized in that** each retaining crosspiece (22 and 28) is connected to the carrying element (16) via a transition portion on the periphery of the inner accommodating opening (18), and extends outwards away from the transition portion and from the accommodating opening (18).

8. Hollow-wall box according to Claim 7,
**characterized in that** each transition portion, for forming the retaining contours (20) for the latching elements (9a) of the appliance insert (9), has at least one retaining edge (34) formed by an aperture (32).

9. Hollow-wall box according to one of Claims 1 to 8,
**characterized in that** the carrying element (16) is designed in the form of a multiple frame for connection to at least two box bodies (2).

10. Hollow-wall box according to one of Claims 1 to 9,
**characterized in that** the carrying element (16), in the form of a single-piece shaped part, consists of plastics material or metal.

## Revendications

1. Boîte pour cloison creuse (1) pour l'installation électrique, comprenant un corps de boîte (2) en forme de pot possédant une ouverture (4) unilatérale, destiné à être introduit dans un trou découpé dans une cloison de montage (8) et à accueillir un insert d'appareillage (9), ainsi qu'un bord d'appui (6) entourant l'ouverture (4) du corps de boîte (2) à la manière d'une bride et destiné à s'appuyer sur la cloison de montage (8), et comprenant une fixation à griffes munie d'éléments de maintien (10) de type griffes, guidés sur le côté extérieur du corps de boîte (2) et pouvant être actionnés au moyen d'une vis de montage (14) respective, le corps de boîte (2) et le bord d'appui (6) étant réalisés sous la forme de pièces individuelles séparées, le bord d'appui (6) étant constitué d'un élément porteur (16) plat en forme de cadre à la manière d'un anneau porteur courant sur les appareillages d'installation électrique et l'élément porteur (16) et le corps de boîte (2) pouvant être montés en commun avec les vis de montage (14) de la fixation à griffes, l'élément porteur (16) pouvant être positionné par rapport au corps de boîte (2) dans un plan de montage en vue de son orientation, **caractérisé en ce que** l'élément porteur (16) possède, dans la zone de chaque vis de montage (14), un élément jointif de maintien (22) venant en prise dans le corps de boîte (2) et espacé parallèlement de celui-ci, l'élément porteur (16) et chaque élément jointif de maintien (22) possédant des ouvertures traversantes (24, 26) alignées pour la vis de montage (14) correspondante, de telle sorte qu'une tête de vis (14a) de la vis de montage (14) est disposée noyée dans la zone entre l'élément porteur (16) et l'élément jointif de maintien (22).

2. Boîte pour cloison creuse selon la revendication 1, **caractérisée en ce que** l'élément porteur (16) forme une jonction pour une liaison par enclenchement avec l'insert d'appareillage (9).

3. Boîte pour cloison creuse selon la revendication 1 ou 2, **caractérisée en ce que** l'élément porteur (16) possède une ouverture d'accueil intérieure (18) munie de contours de maintien (20) en bordure qui peuvent être pris par l'arrière par des éléments d'enclenchement (9a) élastiques à ressort de l'insert d'appareillage (9).

4. Boîte pour cloison creuse selon la revendication 3, **caractérisée en ce que** l'ouverture d'accueil (18) de l'élément porteur (16) est configurée relativement aux contours de maintien (20) de telle sorte que l'insert d'appareillage (9) peut être introduit avec enclenchement dans au moins deux orientations différentes, notamment pivotées de 90° dans le plan de montage, en étant cependant à chaque fois bloqué contre une rotation dans l'ouverture d'accueil (18) dans l'état introduit.

5. Boîte pour cloison creuse selon l'une des revendications 1 à 4, **caractérisée en ce que** l'élément porteur (16) est relié au corps de boîte (2) en plus à la manière d'une liaison par baïonnette.

6. Boîte pour cloison creuse selon la revendication 5, **caractérisée en ce que** l'élément porteur (16) possède, dans deux zones diamétralement opposées, à chaque fois un élément jointif de maintien (28) venant en prise dans le corps de boîte (2) et espacé parallèlement de celui-ci, les éléments jointifs de maintien (28) pouvant être introduits dans le corps de boîte (2) dans une position de rotation relative de celui-ci et, après une rotation relative dans une position de montage, venant en prise par l'arrière respectivement avec un épaulement de maintien (30) à l'intérieur du corps de boîte (2).

7. Boîte pour cloison creuse selon l'une des revendications 5 à 6, **caractérisée en ce que** chaque élément jointif de maintien (22 et 28) est relié par le biais d'une portion de transition au bord de l'ouverture d'accueil intérieure (18) avec l'élément porteur (16) et s'étend vers l'extérieur en s'éloignant de la portion de transition et de l'ouverture d'accueil (18).

8. Boîte pour cloison creuse selon la revendication 7, **caractérisée en ce que** chaque portion de transition possède au moins une arête de maintien (34) formée par un creux (32) et destinée à former les contours de maintien (20) pour les éléments d'enclenchement (9a) de l'insert d'appareillage (9).

9. Boîte pour cloison creuse selon l'une des revendications 1 à 8, **caractérisée en ce que** l'élément porteur (16) est réalisé sous la forme d'un cadre multiple pour une liaison avec au moins deux corps de boîte (2).

10. Boîte pour cloison creuse selon l'une des revendications 1 à 9, **caractérisée en ce que** l'élément porteur (16) se compose d'une pièce préformée monobloc en matière plastique ou en métal.
